# EUROPEAN PATENT APPLICATION

(11) **EP 4 779 264 A2**
(43) Date of publication of application: **22.07.2026**
(21) Application number: 26177003.6
(22) Date of filing: 22.06.2023
(51) Int. Cl.: G01C 19/5747

(54) **MEMS GYROSCOPE WITH ENHANCED ROBUSTNESS AGAINST VIBRATIONS AND REDUCED DIMENSIONS**

(30) Priority: 01.07.2022 IT 202200014050
(62) Divisional of application: 23180883.3
(71) Applicant: STMicroelectronics S.r.l., 20864 Agrate Brianza (MB) (IT)
(72) Inventor: FALORNI, Luca Giuseppe, 20864 AGRATE BRIANZA (MB) (IT); FEDELI, Patrick, 20864 AGRATE BRIANZA (MB) (IT); GATTERE, Gabriele, 20864 AGRATE BRIANZA (MB) (IT); VALZASINA, Carlo, 20864 AGRATE BRIANZA (MB) (IT); CARULLI, Paola, 20864 AGRATE BRIANZA (MB) (IT)
(74) Representative: Studio Torta S.p.A.

(57) **Abstract**

A MEMS gyroscope (50) comprising a first and a second gyroscope units (40A, 40B) driven in phase opposition, each gyroscope unit including a first movable mass (18) configured to move with respect to a fixed structure (13) along a first drive direction and along a first sense direction, transverse to the first drive direction; a first drive assembly (10), coupled to the first movable mass and configured to generate a first alternate drive movement; a first drive elastic structure (20), coupled to the first movable mass and to the first drive assembly, rigid in the first drive direction and compliant in the first sense direction; a second movable mass (19), configured to move with respect to the fixed structure in a second drive direction parallel to the first drive direction and in a second sense direction parallel to the first sense direction; a second drive assembly (11), coupled to the second movable mass and configured to generate a second alternate drive movement in the second drive direction; and a second drive elastic structure (20), coupled to the second movable mass and to the second drive assembly, rigid in the second drive direction and compliant in the second sense direction. A first and a second bridge element (51A, 51B), coupled to the first, respectively the second drive assemblies (10; 110) of both gyroscope units, are rotatable around a vertical axis.

## Description

The present invention relates to a MEMS gyroscope with enhanced robustness against vibrations and reduced dimensions.

As known, a gyroscope made using MEMS ("Micro ElectroMechanical Systems") technology is formed in a die of semiconductor material, for example silicon, and comprises at least one movable mass suspended on a substrate and free to oscillate with respect to the substrate with one or more degrees of freedom.

The movable mass is generally coupled to a drive structure which causes an oscillation of the movable mass along a drive direction, and is coupled to the substrate by detection electrodes capable of detecting a displacement of the movable mass along a sense direction.

When the MEMS gyroscope rotates with an angular speed around a rotation axis perpendicular to the drive direction, the movable mass is subject to a Coriolis force directed along the sense direction, perpendicular to the rotation axis and to the drive direction. The measurement of the displacement of the movable mass therefore allows sensing of the external angular speed.

Current MEMS gyroscopes are of uniaxial, biaxial or triaxial type, configured to sense movement along one, two or three axes.

In all cases, they are generally sensitive to vibrations that are directed parallel to the sense and/or drive axis or axes and may cause spurious displacements and therefore generation of spurious signals. Such spurious signals are unwanted, as they cause a noise, and may affect the stability of the gyroscope.

In general, in fact, a sensor (specifically, a gyroscope) is considered stable when the output signal only depends on the quantity to be sensed, here the external rate.

In particular, for gyroscopes usable in the automotive field, it is desired that they are resistant to vibrations up to several tens of kHz ("robustness to vibrations").

To increase the sensing robustness, it is known to use multiple redundant structures, so as to make the device less sensitive to external vibrations.

However, doubling or even completely multiplying the gyroscope structure entails a very large size and does not always solve the problem.

WO 02/066929 discloses a MEMS gyroscope having a fixed structure, two movable masses, two drive assemblies and two drive elastic structures.

A similar MEMS gyroscope is disclosed by DE 10 2007 030119.

The aim of the present invention is to provide a gyroscope which has a high robustness against vibrations, with reduced size.

According to the present invention, a MEMS gyroscope is provided, as defined in the attached claims.

For a better understanding of the present invention, embodiments thereof are now described, purely by way of nonlimiting example, with reference to the attached drawings, wherein:
- Figure 1 is a schematic top view of an elementary structure of a MEMS gyroscope that does not belong to the invention, in rest condition;
- Figure 2 is a schematic top view of the elementary structure of Figure 1, in drive mode;
- Figure 3 is a schematic top view of the elementary structure of Figure 1, in sense mode;
- Figure 4 is a schematic top view of the elementary structure of Figure 1, in presence of vibrations directed along the drive direction;
- Figure 5 is a schematic top view of a MEMS gyroscope, according to the invention, formed by two elementary structures of Figure 1;
- Figure 6 shows a possible implementation of the gyroscope of Figure 5, for sensing yaw movements;
- Figure 7 is a schematic top view of a MEMS gyroscope for sensing pitch/roll movements that does not belong to the invention;
- Figure 8 shows a possible implementation of the gyroscope of Figure 7, according to the invention; and
- Figure 9 shows a possible implementation of the gyroscope, for sensing yaw and pitch/roll movements (biaxial gyroscope).

The following description refers to the arrangement as shown; consequently, expressions such as "above", "below", "top", "bottom", "right", "left", "high", "low", "clockwise", "counterclockwise" relate to the attached Figures and are not to be intended in a limiting manner.

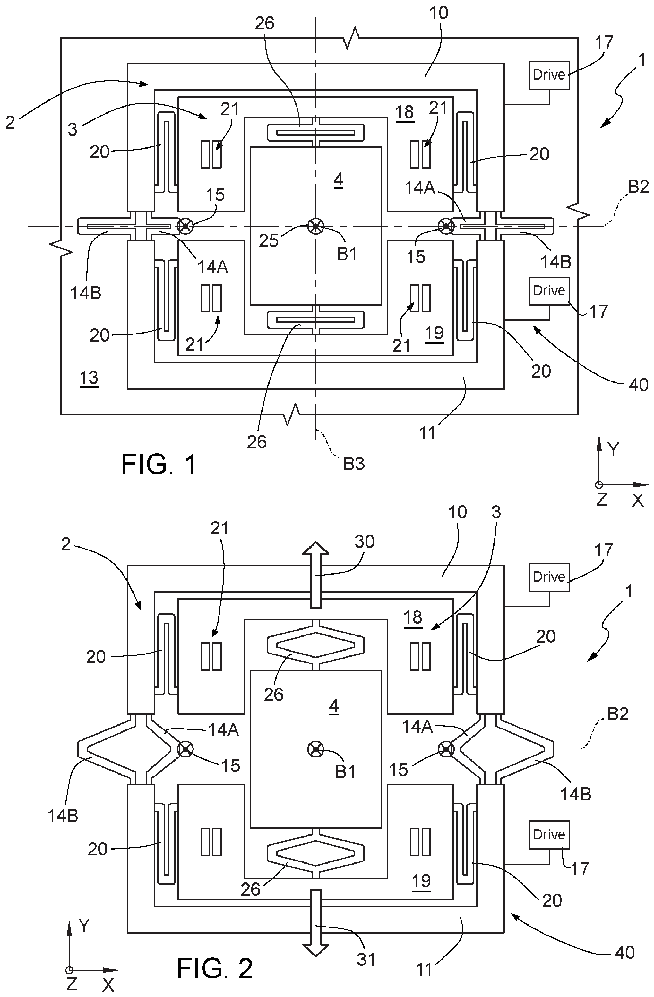

Figure 1 shows a gyroscope 1 made using MEMS technology and having a substantially planar structure, with main extension in a horizontal plane XY of an inertial reference system XYZ.

The gyroscope 1 is of a uniaxial type, for sensing yaw, that is rotations of the gyroscope 1 around an axis perpendicular to the horizontal plane XY (vertical axis Z of the inertial reference system XYZ).

The gyroscope 1 of Figure 1 comprises a gyroscope unit 40 having a first barycentric axis B1, parallel to the vertical axis Z, a second barycentric axis B2, parallel to a first horizontal axis X, and a third barycentric axis B3, parallel to a second horizontal axis Y of the inertial reference system XYZ.

The gyroscope 1 substantially has a three-level architecture, symmetrical with respect to the second and the third barycentric axes B2, B3 and including a drive structure 2; a Coriolis structure 3 and a sense mass 4.

The drive structure 2, the Coriolis structure 3 and the sense mass 4 extend mainly in the plane XY (along the first and the second horizontal axes X, Y) and have a thickness (measured parallel to the vertical axis Z) negligible with respect to other dimensions.

The drive structure 2 comprises two frames 10, 11 (hereinafter also referred to as first and second frame 10, 11, where it is necessary to distinguish them), here approximately C-shaped, arranged with the respective concavities facing each other, symmetrically to the second barycentric axis B2.

The frames 10, 11 are coupled to a support 13 (for example a substrate of a semiconductor die forming part of a fixed structure) through first springs 14A; the first and the second frames 10, 11 are also elastically coupled to each other through frame coupling springs 14B. The first springs 14A and the frame coupling springs 14B allow the suspension of the frames 10, 11 on the support 13 (through a respective anchoring point 15) and allow the frames 10, 11 to move (drive movement) only in one drive direction, here parallel to the second horizontal axis Y.

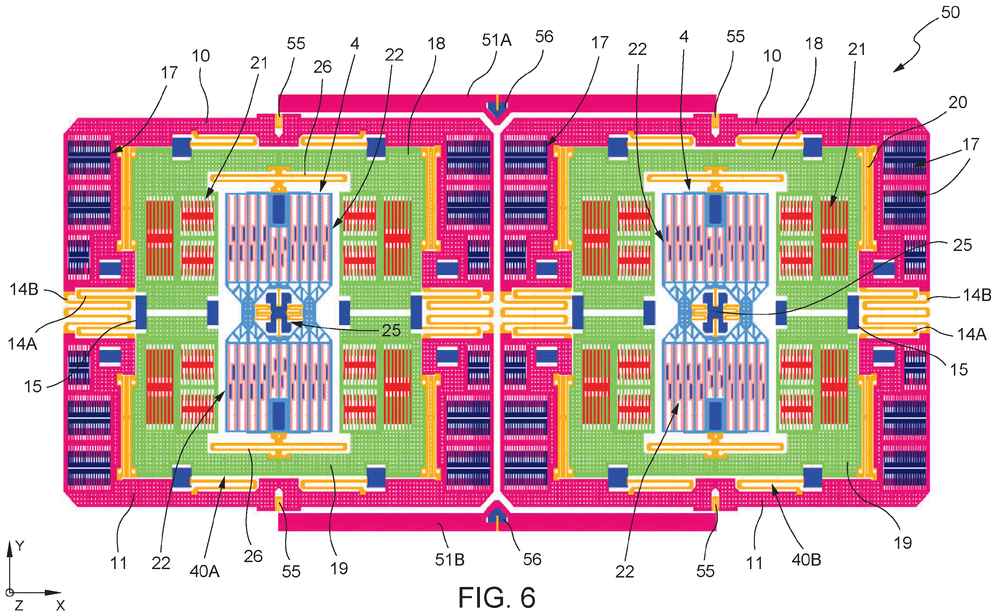

Actuation assemblies (shown only schematically at 17 in Figures 1-4 and shown for example in Figure 6), for example of capacitive electrostatic type, are coupled to the frames 10, 11 to control the drive movement of the frames 10, 11 in a drive direction, in phase opposition to each other, as indicated in Figure 2 by arrows 30, 31 and as described in more detail below. For example, the actuation assemblies 17 are coupled between each frame 10, 11 and the support 13, in a per se known manner.

The Coriolis structure 3 comprises two Coriolis masses 18, 19, here also approximately C-shaped and arranged, symmetrically to the second and the third barycentric axes B2, B3, inside the concavities of the frames 10, 11, with the respective concavities facing each other. In other words, here, each Coriolis mass 18, 19 is surrounded on three sides by a respective frame 10, 11.

Furthermore, in Figure 1, each Coriolis mass 18, 19 is formed by three sides arranged at right angles with respect to those adjacent, parallel to corresponding sides of the respective frame 10, 11.

Each Coriolis mass 18, 19 is coupled to a respective frame 10, 11 through second springs 20 which allow a mutual movement between the frames 10, 11 and the respective Coriolis mass 18, 19 only in a direction parallel to the second horizontal axis Y (sense movement).

The sense mass 4 here extends inside both concavities of the Coriolis masses 18, 19. In Figure 1, the sense mass has a generally quadrilateral shape, with sides parallel to the sides of the Coriolis masses 18, 19 and of the frames 10, 11.

The sense mass 4 is anchored to the support 13 here in central position through a sense elastic anchoring system 25 (shown schematically) which allows the rotation of the sense mass 4 around a rotation axis (here, the first barycentric axis B1).

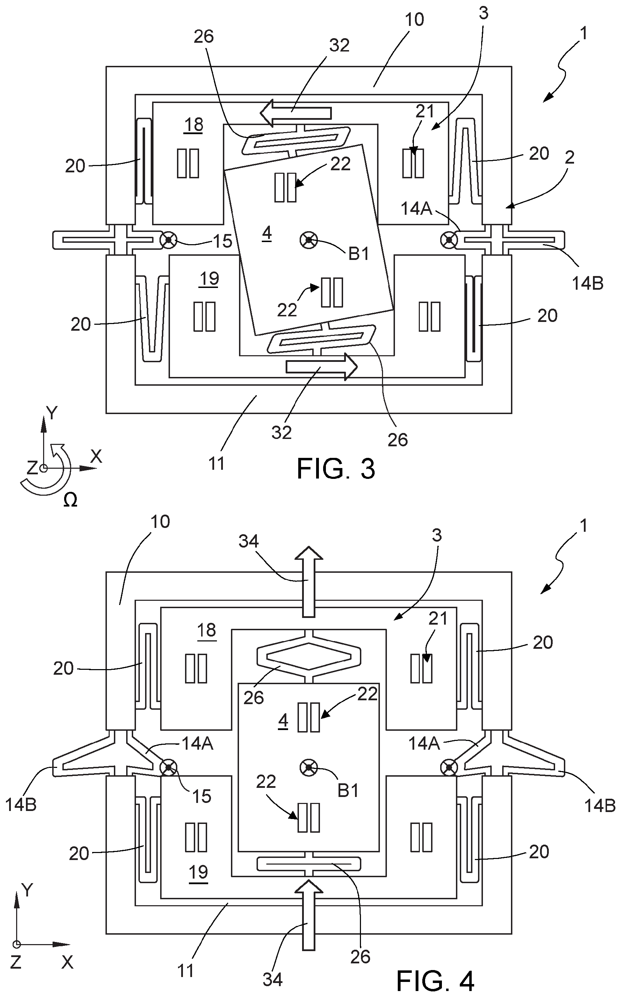

Furthermore, the sense mass 4 is elastically coupled to the Coriolis masses 18, 19 through respective third springs 26 which allow a relative movement between the Coriolis masses 18, 19 and the sense mass 4 in the direction of the second horizontal axis Y (to decouple the drive movement of the Coriolis masses 18, 19 from the sense mass 4, as shown in Figure 2) and couple the Coriolis masses 18, 19 to the sense mass 4 during the sense movement (to cause the rotation of the sense mass 4 in a sense mode, as shown in Figure 3 and discussed below).

The gyroscope 1 also has quadrature compensation structures 21, shown only schematically and of known type; for example, each Coriolis mass 18, 19 may be capacitively coupled to compensation electrodes integral with the support 13.

The gyroscope also has a sense structure 22, schematically indicated in Figure 3 and shown in Figure 6, able to sense the angular position of the sense mass 4. For example, the sense mass 4 may be capacitively coupled to fixed electrodes, carried by the support 13.

The gyroscope 1 of Figure 1 operates as follows (hereinafter, the movements caused by the actuation and the Coriolis force are described separately as drive mode and sense mode; as obvious to the person skilled in the art and discussed below, the sense movement occurs only when the gyroscope 1 is driven along the drive direction).

With reference to Figure 2 and as indicated above, in the drive mode, the frames 10, 11 are operated by applying drive signals to the actuation assemblies 17 associated with each frame 10, 11. In particular, the drive signals are alternate periodic signals (for example, sinusoidal waves, square waves or other shaped waves), equal and in phase opposition, applied to equivalent elements (for example through comb structures) so as to generate, in each instant, a net harmonic force and to cause drive movements both directed parallel to the second horizontal axis Y, but in the opposite direction. In practice, the frames 10, 11 move with linear motion in the opposite manner, moving away from and towards each other at each half-period of the drive signals, as indicated by arrows 30, 31, directed in the opposite direction.

Thereby, the Coriolis masses 18, 19 are pulled by the frames 10, 11 through the second springs 20, but the sense mass 4 is stationary, being constrained to the support 13 through the sense elastic anchoring system 25 and decoupled from the Coriolis masses 18, 19 (in drive mode) through the third springs 26, which deform.

As shown in Figure 3, in presence of an angular speed Ω around the vertical axis Z, due to the Coriolis effect, an acceleration parallel to the first horizontal axis X acts on the gyroscope 1. Since the Coriolis masses 18, 19 are actuated in opposite directions, they are subject to accelerations (forces) directed in opposite directions and move correspondingly in phase opposition, as represented in Figure 3 by arrows 32.

Due to the coupling of the Coriolis masses 18, 19 to the sense mass 4 through the third springs 26 (rigid in the sense direction, here parallel to the first horizontal axis X) and due to the sense elastic anchoring system 25 (which allows only the rotation of the sense mass 4), the sense mass 4 rotates around the first barycentric axis B1 (in Figure 3, counterclockwise, sense movement).

The rotation of the sense mass 4 may be sensed through the angular position sense structure as a distance variation with respect to fixed electrodes (sense structure 22), in a per se known manner. However, other solutions (sensing as a modification of the facing area) are also possible.

The gyroscope 1 may therefore reliably sense yaw movements (rotations with respect to the vertical axis Z) and, virtually, is not sensitive to linear vibrations.

In fact, vibrations along the first horizontal axis X, which might cause movements of the Coriolis masses 18, 19 along this axis X, cannot be conveyed/transferred to the sense mass 4, since both Coriolis masses 18, 19 would be accelerated in the same direction.

As to vibrations along the second horizontal axis Y (which might cause movements of both Coriolis masses 18, 19 along this axis, as shown in Figure 4 and represented by unidirectional arrows 34), they virtually cause no rotation of the sense mass 4 and therefore are not detectable in case of ideal structure. However, in case of small dimensional inaccuracies and asymmetries due to manufacturing tolerances, for example in presence of a quadrature effect, well known to the person skilled in the art, undesired rotations of the sense mass 4 might occur, interpretable as due to the Coriolis force even in the absence of angular speed Ω along the vertical axis Z.

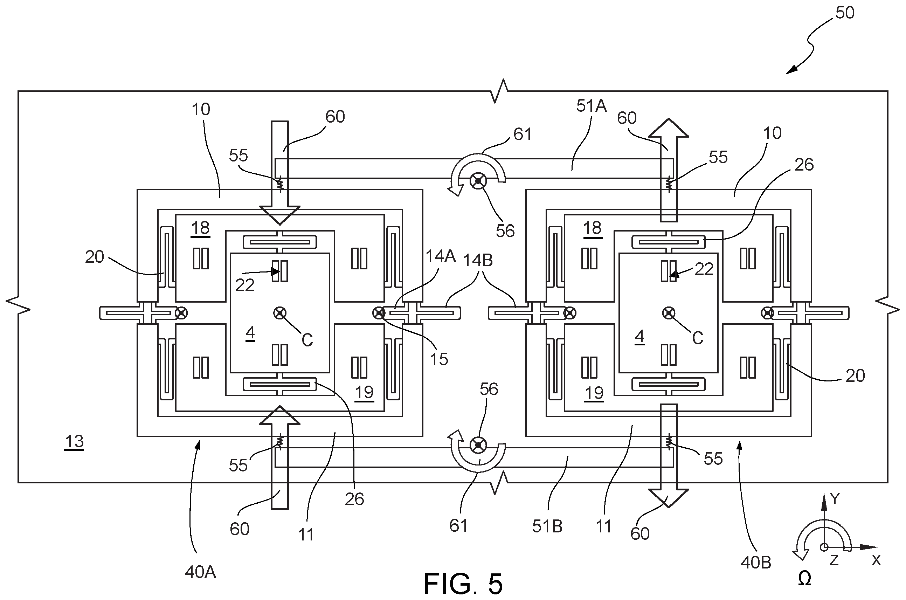

To improve the stability of the gyroscope 1, a gyroscope has been developed that is also resistant to secondary influences, with doubled structure, as shown in Figure 5.

Figure 5 shows a gyroscope 50 comprising two gyroscope units, equal to the gyroscope units 40 of Figure 1 and therefore identified by the same reference number (but referred to, where useful for understanding, as first gyroscope unit 40A and second gyroscope unit 40B).

The gyroscope units 40A, 40B are mutually coupled through two bridge elements (top bridge element 51A, bottom bridge element 51B).

In detail, in Figure 5, the top bridge element 51A is coupled to the first frame 10 of each gyroscope unit 40, and the bottom bridge element 51B is coupled to the second frame 11 of each gyroscope unit 40. In particular, the bridge elements 51A, 51B are connected at approximately central points of the respective frames 10, 11. In Figure 5, the bridge elements 51A, 51B are connected with the respective frames 10, 11 at their respective ends.

The bridge elements 51A, 51B are coupled to the frames 10, 11 through fourth springs 55, shown only schematically, substantially rigid in the direction of the second horizontal axis Y and allowing small relative rotations, so that the bridge elements 51A, 51B follow the movement of the frames 10, 11, as explained below.

Furthermore, the bridge elements 51A, 51B are anchored to the support 13 through bridge anchors 56 which are arranged centrally with respect to the same bridge elements 51A, 51B and which allow the rotation thereof around respective axes passing through the bridge anchors 56 and parallel to the vertical axis Z.

In the gyroscope 50 of Figure 5, the gyroscope units 40 are driven in phase opposition, that is when the frames 10, 11 of the first gyroscope unit 40A move towards the second barycentric axis B2, the frames 10, 11 of the second gyroscope unit 40B move away from the second barycentric axis B2 (as represented by arrows 60 in Figure 5), and vice versa.

Consequently, the portions of the bridge elements 51A, 51B coupled to the frames 10, 11 (here, the ends of the bridge elements 51A, 51B) move upwards or downwards in Figure 5 (in a direction, as a first approximation, parallel to the second horizontal axis Y) in an alternate manner, that is the movement in one direction (for example downwards) of the first frame 10 of a gyroscope structure 40 (for example the first gyroscope structure 40A) and the upward movement of the first frame 10 of the other gyroscope structure 40 (in the example, the second gyroscope structure 40B) causes the rotation of the top bridge element 51A in a first direction (in the example, counterclockwise) around its own bridge anchor 56; and vice versa for the second frames 11 and the bottom bridge element 51B, as shown by arrows 61.

Any angular speed Ω acting on the gyroscope 50 therefore causes displacements in opposite directions of the Coriolis masses 18 of the gyroscope units 40A, 40B, and of the Coriolis masses 19 of the gyroscope units 40A, 40B, as well as rotations in opposite directions of the sense masses 4 of the first and the second gyroscope units 40A, 40B. The angular position sense structures 22 of the first and the second gyroscope units 40A, 40B thus provide equal and opposite signals.

In this structure, any vibrations parallel to the second horizontal axis Y cannot cause any movement of the frames 10, 11, since any accelerations acting thereon are prevented by the bridge elements 51A, 51B, which cannot translate due to the bridge anchors 56. In any case, as explained above with reference to Figure 4, any residual vibrations may be canceled.

A possible implementation of the gyroscope 50 for sensing yaw movements is shown in Figure 6, wherein the gyroscope units 40, as well as the actuation assemblies 17, the quadrature compensation structures 21 and the sense structures 22 are visible.

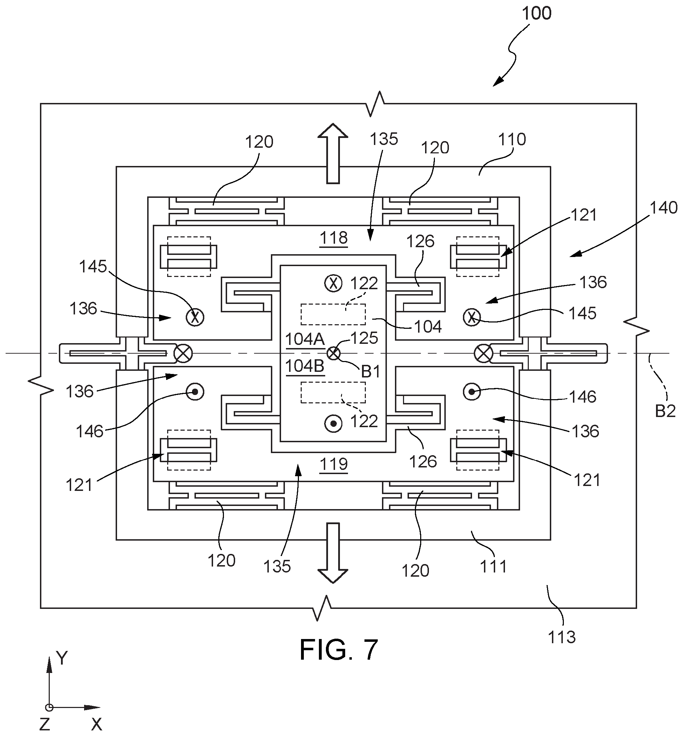

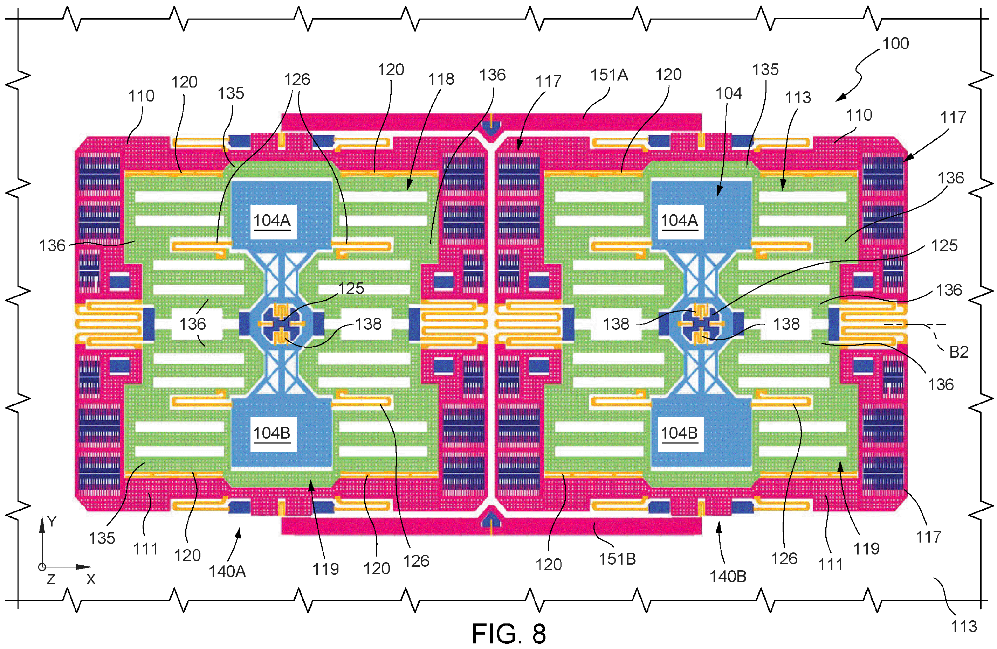

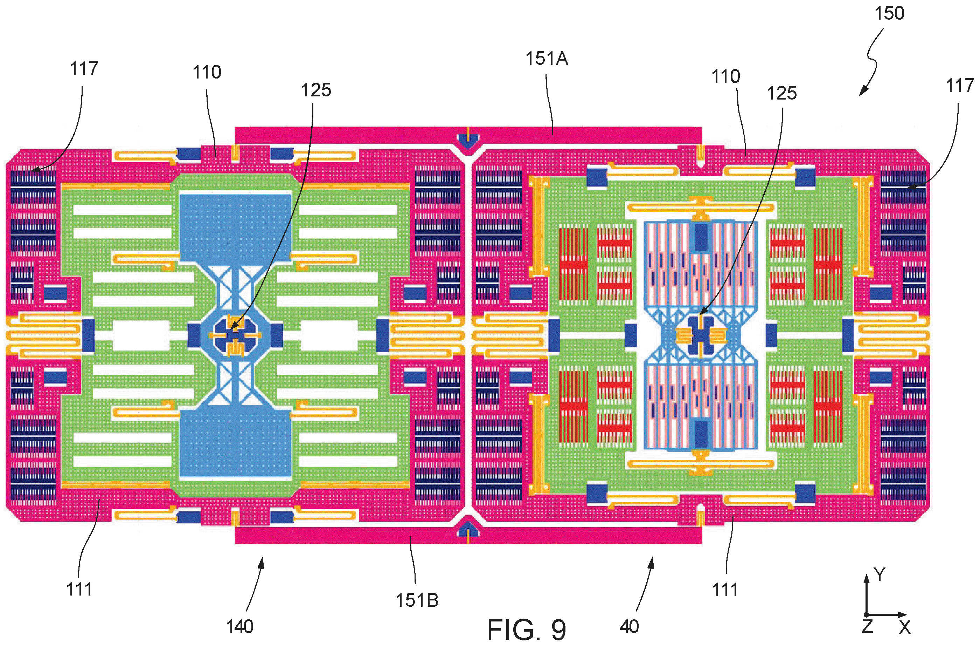

Figure 7 shows a gyroscope 100 for sensing pitch/roll movements (i.e. rotations of the gyroscope 100 around one of the horizontal axes X, Y of the inertial system XYZ) that includes a single gyroscope unit used in the gyroscopes of Figures 8 and 9 described later on. In particular, the following description refers to the pitch movement; the roll sensing may be sensed by rotating the whole structure by 90° (or through a structure modified by a person skilled in the art).

The gyroscope 100 of Figure 7 has a base structure similar to the gyroscope 1 of Figure 1 and operates according to a similar principle, even if based on different movements of the Coriolis masses; consequently, elements similar to those of the gyroscope 1 are indicated with reference numbers increased by 100 and will be described only as far as useful.

Specifically, in the gyroscope 100 of Figure 7, to allow sensing of pitch/roll movements, the Coriolis masses (here indicated by 118, 119) and the sense mass (here indicated by 104) have a degree of freedom along the vertical axis Z.

Here, in particular, in sense mode, the Coriolis masses 118, 119 may rotate in phase opposition around respective hinge axes parallel to the first horizontal axis X and pull, with respective portions, the sense mass (indicated by 104) away from these hinge axes.

Furthermore, the sense mass 104 may rotate around the second barycentric axis B2 (barycentric axis of the gyroscope 1, here forming also a barycentric axis of the sense mass 104 and of the elementary structure, here indicated by 140), parallel to the first horizontal axis X and passing through the first barycentric axis B1 of the sense mass 104.

In detail, in Figure 7, the frames 110, 111 are driven so as to move parallel to the second horizontal axis Y with alternate and phase-opposition motion, as described above with reference to Figure 2, and are coupled to the Coriolis masses 118, 119 so that, in drive mode, they also move parallel to the second horizontal axis Y and in phase opposition.

Furthermore, the Coriolis masses 118, 119 are coupled to the frames 110, 111 so that, in sense mode, in presence of any pitch movements of the gyroscope 100 (i.e. rotations around the second barycentric axis B2), they may also rotate around the hinge axes, as described above, and cause the rotation of the sense mass 104. In fact, with the indicated driving, pitch movements give rise to a Coriolis force parallel to the vertical axis Z in opposite directions on the two sides of the second barycentric axis B2; the sense mass 104, rotating, has a displacement component parallel to the vertical axis Z which may be sensed by electrodes arranged on the fixed structure (support 113), for example placed below or laterally to the sense mass 104.

In particular, in the gyroscope 100 of Figure 7, the sense mass 104 has an elongated shape in a direction parallel to the second horizontal axis Y, with sense portions 104A, 104B arranged on opposite sides of the second barycentric axis B2 and rotating, with respect to a horizontal plane XY, in opposite directions, as explained below. However, while the elongated shape of the sense masses 104 is advantageous, as it allows an optimization of the area, it is not essential.

In Figure 7, each Coriolis mass 118, 119 still is approximately C-shaped, with a base side 135 and protruding arms 136.

The base side 135 of each Coriolis mass 118, 119 is coupled to the respective frame 110, 111 through the second springs (indicated here by 120) and therefore forms a hinge portion hinged to the respective frame 110, 111; the protruding arms 136 extend towards the second barycentric axis B2.

The second springs 120 are here configured to allow the aforementioned rotation of the Coriolis masses 118, 119 around axes parallel to the first horizontal axis X in the sense mode. The second springs 120 are therefore rigid in the drive direction (parallel to the second horizontal axis Y) but compliant in sense direction (parallel to the vertical axis Z).

Due the opposite drive movement (conveyed by the frames 110, 111 to the respective Coriolis masses 118, 119), the Coriolis force determines opposite rotations of the Coriolis masses 118, 119. Consequently, when for example the first Coriolis mass 118 rotates to cause the free ends of its own protruding arms 136 to move towards the support 113 (moving away from an observer, cross symbol 145 in Figure 7), the second mass 119 rotates in the opposite direction, and the free ends of its own protruding arms 136 move away from the support 113 (moving towards the observer, dot symbol 146), and vice versa.

Furthermore, the third springs (here indicated by 126), which couple the Coriolis masses 118, 119 (and more precisely the protruding arms 136) to the sense mass 104, are configured to allow the rotation of the sense mass 104.

The sense mass 104 then follows, with its own sense portions 104A, 104B, the movement parallel to the vertical axis Z of the protruding arms 136 with respect to the plane XY, and rotates around the second barycentric axis B2.

To allow the rotation of the sense mass 104, it is coupled to the support 113 through a sense elastic anchoring system, schematically indicated by 125 (see Figure 8).

As mentioned above, the rotation of the sense portions 104A, 104B may be sensed by sense structures 122 (for example electrodes 122, shown only schematically, dashed) integral with the support 113 and capacitively coupled to the sense portions 104A, 104B to sense capacitive differences due to the distance variations between the same sense portions 104A, 104B and the support 113.

Figure 7 also shows quadrature compensation structures 121.

A possible implementation of the gyroscope 100 for sensing pitch/roll movements, doubling the structure to make it more resistant to linear vibrations in the direction of the second horizontal axis Y (similarly to what described with reference to Figure 5), is shown in Figure 8, wherein actuation assemblies 117 are also indicated.

Here, the frames 110, 111 are driven so as to move (parallel to the second horizontal axis Y) with phase opposition motion in each gyroscope unit (here indicated by 140A, 140B), similarly to what described above with reference to Figure 5.

In particular, in the gyroscope 100, the sense portions 104A, 104B (arranged on opposite sides of the second barycentric axis B2) move, with respect to the vertical axis Z, in opposite directions, in the two gyroscope units 140A, 140B, as explained below.

In fact, here, the Coriolis force directed parallel to the vertical axis Z determines opposite rotations of the Coriolis masses 118, 119 in the two gyroscope units 140A, 140B. Consequently, when for example the first Coriolis mass 118 of the first gyroscope unit 140A and the second Coriolis mass 119 of the second gyroscope unit 140B rotate to cause the free ends of their own protruding arms 136 to move towards the support 113, the second Coriolis mass 119 of the first gyroscope unit 140A and the first Coriolis mass 118 of the second gyroscope unit 140B rotate in the opposite direction, so that the free ends of their own protruding arms 136 move away from the support 113, and vice versa.

Consequently, the two sense masses 104 rotate in opposite directions around the second barycentric axis B2; that is, when the first sense portion 104A of one of the gyroscope units 140 (for example of the first gyroscope unit 140A) moves upwards (towards the observer, away from the support 113), the first sense portion 104A of the other gyroscope unit 140 (in the example, of the second gyroscope unit 140B) moves downwards (away from the observer, towards the support 113), and vice versa.

Figure 8 shows the sense elastic anchoring systems 125, which allow the rotation of the sense masses 104 around the second barycentric axis B2.

The gyroscope 100 of Figure 8 also has a high resistance to vibrations parallel to the second horizontal axis Y (as well as parallel to the first horizontal axis X), for reasons similar to what described with reference to Figure 5.

Figure 9 shows a gyroscope 150 which couples the structures 40 and 140 of Figures 6 and 8 so as to allow both an in-plane sensing (yaw movement) and an out-of-plane sensing (pitch/roll movement).

The gyroscope 150 is particularly advantageous since the presence of a single drive chain for both sense directions (actuation assemblies 117, frames 110, 111, bridge elements 151A, 151B) simplifies the associated control circuits (usually incorporated in separate devices, such as ASICs - Application Specific Integrated Circuits).

The gyroscope 150 also allows the linear vibrations (accelerations) to be rejected, while maintaining good performances and reduced dimensions (for example, 1.5 x 2.5 mm) .

The gyroscope described here is therefore particularly robust, has balanced driving and is insensitive to linear and/or rotational accelerations.

In particular, the gyroscopes described with reference to Figures 5-9 are insensitive to spurious linear vibrations.

The Coriolis force applied to the drive masses cannot generate torques able to cause spurious movements; therefore the drive motion cannot be forced by external accelerations.

As discussed above, the sense movements (yaw and/or pitch and/or roll movements) are insensitive to external linear or angular accelerations and cannot be forced thereby.

The structures may be provided in a compact manner and therefore at reduced costs; in particular, the biaxial solutions allow sensing of external rotational fields acting around different rotation axes with a small structure, capable of providing even redundant signals, also simplifying the signal processing by an associated ASIC.

Finally, it is clear that modifications and variations may be made to the gyroscope described and illustrated herein without thereby departing from the scope of the present invention, as defined in the attached claims. For example, the different embodiments described may be combined to provide further solutions.

## Claims

1. A MEMS gyroscope (50; 100; 150), comprising a first and a second gyroscope units (40A, 40B; 140A, 140B; 40, 140) driven in phase opposition, each gyroscope unit including:
a fixed structure (13; 113);
a first movable mass (18; 118), the first movable mass being configured to move with respect to the fixed structure along a first drive direction and along a first sense direction, transverse to the first drive direction;
a first drive assembly (10; 110), coupled to the first movable mass and configured to generate a first alternate drive movement in the first drive direction;
a first drive elastic structure (20; 120), coupled to the first movable mass and to the first drive assembly, the first drive elastic structure being rigid in the first drive direction, being configured to transfer the first alternate drive movement to the first movable mass and being compliant in the first sense direction;
a second movable mass (19; 119), the second movable mass being configured to move with respect to the fixed structure in a second drive direction parallel to the first drive direction and in a second sense direction parallel to the first sense direction;
a second drive assembly (11; 111), coupled to the second movable mass and configured to generate a second alternate drive movement in the second drive direction, the second alternate drive movement being in phase opposition with respect to the first alternate drive movement;
a second drive elastic structure (20; 120), coupled to the second movable mass and to the second drive assembly, the second drive elastic structure being rigid in the second drive direction, configured to transfer the second alternate drive movement to the second movable mass and compliant in the second sense direction; and
a first and a second bridge element (51A, 51B; 151A, 151B), the first bridge element (51A; 151A) coupled to the first drive assemblies (10; 110) of both gyroscope units (40A, 40B; 140A, 140B; 40, 140), the second bridge element (51B; 151B) coupled to the second drive assemblies (11; 111) of both gyroscope units (40A, 40B; 140A, 140B; 40, 140), each bridge element (51A, 51B; 151A, 151B) coupled to the fixed structure (13; 113) and rotatable around a vertical axis (Z).

2. The MEMS gyroscope according to the preceding claim, further comprising:
a first sense elastic system (4, 25; 104, 125), coupling the first movable mass (18; 118) to the fixed structure (13; 113) and configured to allow movements of the first movable mass with respect to the fixed structure in the first drive direction and in the first sense direction;
a second sense elastic system (4, 25; 104, 125), coupling the second movable mass (19; 119) to the fixed structure and configured to allow movements of the second movable mass with respect to the fixed structure in the second drive direction and in the second sense direction.

3. The MEMS gyroscope according to claim 2, wherein:
the first sense elastic system comprises a first sense mass (4; 104), a first sense elastic structure (26; 126) and a first anchoring elastic structure (25; 125), the first sense elastic structure (26; 126) being coupled between the first movable mass (18; 118) and the first sense mass (4; 104), compliant in the first drive direction and rigid in the first sense direction, the first anchoring elastic structure (25; 125) being coupled between the first sense mass and the fixed structure (13; 113) and compliant in the first sense direction;
the second sense elastic system comprises a second sense mass (4; 104), a second sense elastic structure (26; 126) and a second anchoring elastic structure (25; 125), the second sense elastic structure (26; 126) being coupled between the second movable mass (19; 119) and the second sense mass (4; 104), compliant in the second drive direction and rigid in the second sense direction, the second anchoring elastic structure (25; 125) being coupled between the second sense mass and the fixed structure and compliant in the second sense direction; and
the first sense mass and the second sense mass are coupled to respective position sense structures (22; 122).

4. The MEMS gyroscope according to any of the preceding claims, wherein the first and second bridge elements (51A, 51B; 151A, 151B) are connected at approximately central points of the respective first and second drive assemblies (10, 11)

5. The MEMS gyroscope according to any of the preceding claims, wherein the first and second bridge elements (51A, 51B; 151A, 151B) are connected to the respective first and second drive assemblies (10, 11; 110, 111) through respective springs (55) substantially rigid in the first direction.

6. The MEMS gyroscope according to any of the preceding claims, wherein the first and second bridge elements (51A, 51B; 151A, 151B) are coupled to the fixed structure (13; 113) through bridge anchors (56) arranged centrally with respect to the respective bridge elements (51A, 51B; 151A, 151B).

7. The MEMS gyroscope according to any of the preceding claims, wherein the first and second drive assemblies (10, 11; 110, 111) of each gyroscope unit (40A, 40B; 140A, 140B; 40, 140) comprise respective frames that are are approximately C-shaped with the respective concavities facing each other symmetrically to a first barycentric axis (B2) .

8. The MEMS gyroscope according to the preceding claim, wherein the first and second movable mass (18, 19; 118, 119) are approximately C-shaped arranged, symmetrically to the first and a second horizontal barycentric axes (B2, B3), inside the concavities of the first and second drive assemblies (10, 11; 110, 111), with the respective concavities facing each other.

9. The MEMS gyroscope according to any of the preceding claims, wherein the first and the second movable masses (18, 19) of both gyroscope units (40A, 40B) are a yaw sense portion.

10. The MEMS gyroscope according to any of claims 1-8, wherein the first and the second movable masses (118, 119) of both gyroscope units (140A, 140B) are a pitch/roll sense portion.

11. The MEMS gyroscope according to any of claims 1-8, wherein the first and the second movable masses (18, 19) of the first gyroscope unit (40) are a yaw sense portion and the first and the second movable masses (118, 119) of the second gyroscope unit (140) are a pitch/roll sense portion.
